# EUROPEAN PATENT APPLICATION

(11) **EP 4 468 447 A1**
(43) Date of publication of application: **27.11.2024**
(21) Application number: 23889847.2
(22) Date of filing: 07.07.2023
(51) Int. Cl.: H01M 10/48, G01L 1/18, G01K 7/16

(54) **BATTERY CELL PROVIDED WITH SENSOR, AND LITHIUM BATTERY**

(30) Priority: 13.04.2023 CN 202310392917
(71) Applicant: Shenzhen Mems Technology Co. Ltd, Shenzhen, Guangdong 518000 (CN)
(72) Inventor: CHEN, Jianhua, Shenzen, Guangdong 518000 (CN)
(74) Representative: Petraz, Gilberto Luigi
(86) International application number: PCT/CN2023/106286
(87) International publication number: WO 2024/212381

(57) **Abstract**

The present application discloses a cell with a sensor, and a lithium battery. The cell contains an electrolyte, and includes: a silicon substrate; a microelectromechanical sensor, disposed on and electrically connected to the silicon substrate; a signal processing chip, disposed on the silicon substrate and located on one side of the microelectromechanical sensor, and electrically connected to the silicon substrate and the microelectromechanical sensor; and a stress diaphragm, disposed above the microelectromechanical sensor, one side of the stress diaphragm being in contact with the microelectromechanical sensor, and the other side of the stress diaphragm being in contact with the electrolyte inside the cell for detecting temperature and/or pressure data inside the cell. According to the present application, the stress diaphragm is disposed on the microelectromechanical sensor to sense and acquire the pressure data of the cell, and at the same time, acquire the temperature data inside the cell, and then the pressure data and the temperature data are analyzed and output by means of the signal processing chip, so that current safety indexes of the lithium battery are obtained, and then whether to take relevant safety measures on the lithium battery is determined to ensure the safety of the lithium battery.

## Description

The present application claims the priority of the Chinese patent application filed on April 13th, 2023 before the CNIPA, China National Intellectual Property Administration with the application number of 202310392917. X and the title of "Cell with Sensor, and Lithium Battery", which is incorporated herein in its entirety by reference.

### Technical Field

The present application relates to the technical field of lithium batteries, in particular to a cell with a sensor, and a lithium battery.

### Background Art

With the diversification of global energy collection methods, countries around the world are exploring more ways to collect and store electric energy. For example, a drive method of traditional means of transportation has gradually changed from electric energy to lithium batteries, while energy storage and drive methods of products in the electronics industry are growing geometrically to rapidly penetrate the markets of automobiles and energy storage power plants. The inventor realizes that with the rapid development of the industry, the demand for the safety of lithium battery products is also gradually increasing. Therefore, how to ensure the safety of lithium battery products is a problem to be solved by a person skilled in the art.

### Summary of the Invention

An embodiment of the present application provides a cell with a sensor, aiming to determine the safety status of a lithium battery by collecting pressure and temperature data inside the lithium battery, so as to achieve the effect of ensuring the safety of the lithium battery.

An embodiment of the present application provides a cell with a sensor. The cell with the sensor contains an electrolyte, and includes:
a silicon substrate;
a microelectromechanical sensor, disposed on and electrically connected to the silicon substrate;
a signal processing chip, disposed on the silicon substrate and located on one side of the microelectromechanical sensor, and electrically connected to the silicon substrate and the microelectromechanical sensor; and
a stress diaphragm, disposed above the microelectromechanical sensor, one side of the stress diaphragm being in contact with the microelectromechanical sensor, and the other side of the stress diaphragm being in contact with the electrolyte inside the cell for detecting temperature and/or pressure data inside the cell.

Further, the silicon substrate is provided with a Wheatstone bridge, and the signal processing chip is connected to an output end of the Wheatstone bridge.

Further, the Wheatstone bridge has a symmetrical resistance value of 100 S2-1000 Q.

Further, the signal processing chip is an analog-to-digital converter.

Further, the analog-to-digital converter has a conversion range of 10 bits-32 bits.

Further, the signal processing chip has one or more standard communication protocols, and the standard communication protocols are IIC protocols, SPI protocols or TTL protocols.

Further, the microelectromechanical sensor and/or the signal processing chip is embedded in the silicon substrate by way of automated laser welding or piezoresistive submerged arc welding.

Further, the microelectromechanical sensor is made of monocrystalline silicon.

Further, the stress diaphragm is made of aluminum.

An embodiment of the present application further provides a lithium battery. The lithium battery includes the cell with the sensor according to any one of the items described above.

The embodiments of the present application provide the cell with the sensor, and the lithium battery. The cell contains the electrolyte, and includes: the silicon substrate; the microelectromechanical sensor, disposed on and electrically connected to the silicon substrate; the signal processing chip, disposed on the silicon substrate and located on one side of the microelectromechanical sensor, and electrically connected to the silicon substrate and the microelectromechanical sensor; and the stress diaphragm, disposed above the microelectromechanical sensor, one side of the stress diaphragm being in contact with the microelectromechanical sensor, and the other side of the stress diaphragm being in contact with the electrolyte inside the cell for detecting the temperature and/or pressure data inside the cell. According to the embodiments of the present application, the stress diaphragm is disposed on the microelectromechanical sensor to sense and acquire the pressure data of the cell, at the same time, the temperature data inside the cell is acquired through the stress diaphragm, and then the pressure data and the temperature data are analyzed and output by means of the signal processing chip, so that current safety indexes of the lithium battery are obtained, and then whether to take relevant safety measures on the lithium battery is determined according to the safety indexes to ensure the safety of the lithium battery.

### Brief Description of the Drawings

In order to explain the technical solutions in the embodiments of the present application more clearly, the drawings that need to be used in the description of the embodiments will be briefly described below. Apparently, the drawings in the following description illustrate some embodiments of the present application, and a person of ordinary skill in the art may also derive other drawings based on the drawings described herein without any creative effort.
FIG. 1 is a schematic structural diagram of a cell with a sensor according to an embodiment of the present application.
FIG. 2 is a schematic exploded view of a cell with a sensor according to an embodiment of the present application.

### Detailed Description of the Invention

The technical solutions of the embodiments of the present application will be clearly and completely described below with reference to the accompanying drawings of the embodiments of the present application. Apparently, the embodiments described are a part of the embodiments of the present application, rather than all of the embodiments. Based on the embodiments of the present application, all other embodiments obtained by a person of ordinary skill in the art without any creative effort fall within the scope of protection of the present application.

It is to be understood that, when used in this specification and the appended claims, the terms "include" and "have" indicate the presence of the described features, wholes, steps, operations, elements and/or components, but do not exclude the presence or addition of one or more other features, wholes, steps, operations, elements, components and/or collections thereof.

It is also to be understood that the terms as used in the specification of the present application are used merely for the purpose of describing particular embodiments and are not intended to limit the present application. As used in the specification and the appended claims of the present application, the singular forms "a", "one" and "the" are intended to include the plural form unless the context clearly indicates otherwise.

It is to be further understood that the term "and/or" as used in the specification and the appended claims of the present application refers to and includes any combination and all possible combinations of one or more of the items listed in association.

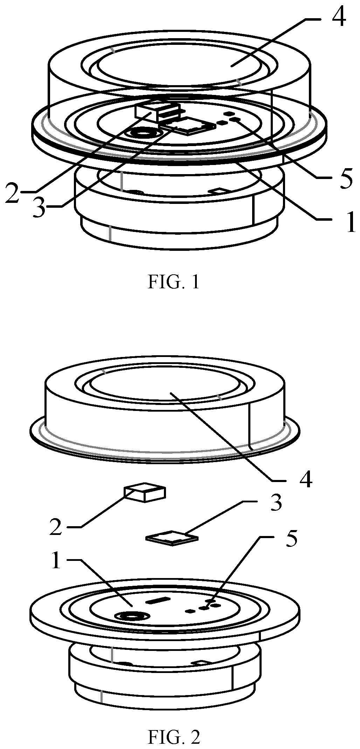

Referring to FIG. 1 and FIG. 2 below, an embodiment of the present application provides a cell with a sensor. The cell with the sensor contains an electrolyte, and includes:
a silicon substrate 1;
a microelectromechanical sensor 2, disposed on and electrically connected to the silicon substrate 1;
a signal processing chip 3, disposed on the silicon substrate 1 and located on one side of the microelectromechanical sensor 2, and electrically connected to the silicon substrate 1 and the microelectromechanical sensor 2; and
a stress diaphragm 4, disposed above the microelectromechanical sensor 2, one side of the stress diaphragm 4 being in contact with the microelectromechanical sensor 2, and the other side of the stress diaphragm being in contact with the electrolyte inside the cell for detecting temperature and/or pressure data inside the cell.

In this embodiment, in addition to including conventional structures, such as the electrolyte, a positive electrode and a negative electrode, the cell is further provided with the silicon substrate 1, the microelectromechanical sensor 2 and the signal processing chip 3 are disposed on the silicon substrate 1, and at the same time, the stress diaphragm 4 is further disposed on the microelectromechanical sensor 2, so that the two sides of the stress diaphragm 4 are in contact with the microelectromechanical sensor 2 and the electrolyte inside the cell, respectively. In this way, the stress diaphragm 4 is disposed on the microelectromechanical sensor 2 to sense and acquire the pressure data of the cell, at the same time, the temperature data inside the cell is acquired through the stress diaphragm 4, and then the pressure data and the temperature data are analyzed and output by means of the signal processing chip 3, so that current safety indexes of a lithium battery are obtained, and then whether to take relevant safety measures on the lithium battery is determined according to the safety indexes to ensure the safety of the lithium battery.

By means of this embodiment, intelligent collection and measurement methods are expansively applied to the fields including and not limited to lithium battery cells and energy storage battery cells based on the way of intelligent sensors, and a dynamic monitoring implementation method is scientifically formed for data collection and safety of various applications. It is also to be noted that the detection method (i.e., acquiring the pressure and temperature data for detection) in the cell according to this embodiment may also be used in the application of different electrical energy in chemical reactions. At the same time, the output of the signal processing chip 3 in the cell may be temperature data corresponding to the actual temperature of the electrolyte inside, or pressure data corresponding to separate real-time measurement of pressure, or comprehensive measurement of simultaneously outputting temperature and pressure in real time, i.e., temperature data and pressure data. The cell provided in this embodiment extremely flexibly solves the pain point of the market, and may effectively help users to collect data of electric energy for driving a car, energy storage and the like in various environments such as charging, discharging and lose of power. Of course, in the process of specific application, there may be one or more microelectromechanical sensors 2, for example, a neural network is formed by several or even hundreds of microelectromechanical sensors 2. In addition, the cell of this embodiment may achieve the effect of real-time collection and detection, i.e., the collected data are unique from each other, have real-time dynamic performance, and may be isolated from each other or integrated. In addition, the output form of the temperature data and the pressure data may be active continuous output, separate passive output, and high-precision output, that is, the cell and the lithium battery according to this embodiment have batchability and a very wide commercial practical value. Moreover, the cell according to this embodiment does not require any strong restrictive definition of the chip layout, mounting, medium, diaphragm shape, substrate material, and the like.

In a specific embodiment, the silicon substrate 1 is provided with a Wheatstone bridge 5, and the signal processing chip 3 is connected to an output end of the Wheatstone bridge 5. The Wheatstone bridge 5 has a symmetrical resistance value of 100 S2-1000 Q. Further, the microelectromechanical sensor 2 is made of monocrystalline silicon. The stress diaphragm 4 is made of aluminum.

The cell of this embodiment may be completed by the silicon substrate 1 with one Wheatstone bridge 5 and high-purity monocrystalline silicon through a bonding process. The symmetrical resistance value of the Wheatstone bridge 5 may be realized by means of ion implantation of 100 ohms to 10000 ohms. The temperature drift that causes a change of the output Wheatstone internal resistance due to the temperature change may also be avoided through temperature compensation at the output end of the Wheatstone bridge 5. Of course, in other embodiments, the cell may also be implemented by making a pole piece of a capacitor on a silicon material, and has a higher noise due to the influence of temperature on the output linearity of pressure. In addition, the microelectromechanical sensor 2 in this embodiment is made of monocrystalline silicon, fabricated circuits are designed by taking a Wheatstone bridge 5 without temperature resistance as an example, and prototype samples are fabricated to evaluate the measurement of the temperature and pressure, so as to ensure the implementability and fabrication of this embodiment.

In a specific embodiment, the signal processing chip 3 is an analog-to-digital converter. Further, the analog-to-digital converter has a conversion range of 10 bits-32 bits. More further, the signal processing chip 3 has one or more standard communication protocols, and the standard communication protocols are IIC protocols, SPI protocols or TTL protocols.

In this embodiment, a 24-bit analog-to-digital converter is additionally provided at the output end of the Wheatstone bridge 5. Based on the perspective of science and technology, the converter is in principle applicable from 10 bits to 32 bits. The converter may be a one-time write, or a finite write, or an infinite write (a theoretical value, i.e., a multi-write mode). Moreover, the converter has one or more standard communication protocols, such as a 2-wire IIC protocol, a 3-wire SPI protocol, or a single-wire TTL protocol, and so on. In specific application scenarios, this embodiment adopts separate output of the 2-wire IIC protocol and the 3-wire SPI protocol for sample preparation, which of course does not mean that other data transmission methods are excluded from the scope of application of this embodiment.

In addition, the microelectromechanical sensor 2 and the signal processing chip 3 may be connected by means of pure gold, alloy, or copper, aluminum or silver wires, etc., or the chip is subjected to ball mounting to realize the electrical connection with a novel flip process. This embodiment provides a method for measuring the pressure and temperature inside the cell and an implementable logic, is innovative in various aspects such as material, signal collection, op-amp, noise processing, temperature elimination, linearity compensation, compatibility with chemical reactions, and encapsulation, and has the advantages of low cost, high precision, fast response, material compatibility, and the capability of performing secondary encapsulation according to the structure of the user.

Further, the microelectromechanical sensor 2 and/or the signal processing chip 3 is embedded in the silicon substrate 1 by way of automated laser welding or piezoresistive submerged arc welding.

Traditional measurement methods include physical safety relief and externally-mounted isolated temperature measurement, which do not have standard installation conditions, and have many disadvantages, for example, external wiring is complex, the signal response is slow, and peripheral digital processing is troublesome. This embodiment may carry out batched high-strength internal embedding by way of automated laser welding or piezoresistive submerged arc welding, which has a series of advantages such as high reliability, digital real-time performance, cost control and chemical compatibility. It is further indicated that the chemical compatibility of this embodiment refers to that by taking the chemical reaction of the electrolyte in the charging and discharging processes as a starting point, it is inevitable to produce gas and release heat with high temperature in the electrochemical process of lithium-ions. At the same time, since the electrolyte has the characteristic of high corrosion during the chemical reaction, the globally common type cell aluminum is used as a pressure intermediary in this embodiment, and the pressure of the mixture of gas and liquid inside the cell is digitally and accurately output without error through the accessibility of the hard medium, thus improving the accuracy of data detection and the safety of a lithium battery.

An embodiment of the present application further provides a lithium battery. The lithium battery includes the cell with the sensor according to any one of the items described above.

The embodiments in the specification are described in a progressive manner, where each embodiment focuses on the differences from other embodiments, and the same or similar parts between the embodiments may be cross-referenced. Since the system disclosed by the embodiments corresponds to the method disclosed by the embodiments, the description is relatively simple, and reference may be made to the description of the method section for relevant information. It is to be noted that a person of ordinary skill in the art may also make improvements and modifications to the present application without departing from the principles of the present application, and these improvements and modifications also fall within the scope of protection of the claims of the present application.

It is also to be noted that in this specification, relational terms such as "first" and "second" are merely used to distinguish one entity or operation from another entity or operation, and do not necessarily require or imply any such actual relationship or order between these entities or operations. Moreover, the terms "comprise", "include" or any other variants thereof are intended to cover non-exclusive inclusion, so that a process, method, article or device including a series of elements not only includes those elements, but also includes other elements not clearly listed, or also includes elements inherent to this process, method, article or device. An element proceeded by the phrase "includes a" does not, without more constraints, preclude the existence of additional identical elements in the process, method, article, or device that includes the element.

## Claims

1. A cell with a sensor, containing an electrolyte, and comprising:
a silicon substrate;
a microelectromechanical sensor, disposed on and electrically connected to the silicon substrate;
a signal processing chip, disposed on the silicon substrate and located on one side of the microelectromechanical sensor, and electrically connected to the silicon substrate and the microelectromechanical sensor, the silicon substrate being provided with a Wheatstone bridge, and
the signal processing chip being connected to an output end of the Wheatstone bridge; and
a stress diaphragm, disposed above the microelectromechanical sensor, one side of the stress diaphragm being in contact with the microelectromechanical sensor, the other side of the stress diaphragm being in contact with the electrolyte inside the cell for detecting temperature and/or pressure data inside the cell, and the stress diaphragm being made of aluminum, wherein
the microelectromechanical sensor and/or the signal processing chip is embedded in the silicon substrate by way of automated laser welding or piezoresistive submerged arc welding.

2. The cell with a sensor according to claim 1, wherein the Wheatstone bridge has a symmetrical resistance value of 100 Ω-1000 Q.

3. The cell with a sensor according to claim 1, wherein the signal processing chip is an analog-to-digital converter.

4. The cell with a sensor according to claim 3, wherein the analog-to-digital converter has a conversion range of 10 bits-32 bits.

5. The cell with a sensor according to claim 1, wherein the signal processing chip has one or more standard communication protocols, and the standard communication protocols are IIC protocols, SPI protocols or TTL protocols.

6. The cell with a sensor according to claim 1, wherein the microelectromechanical sensor is made of monocrystalline silicon.

7. A lithium battery, comprising:
a silicon substrate;
a microelectromechanical sensor, disposed on and electrically connected to the silicon substrate;
a signal processing chip, disposed on the silicon substrate and located on one side of the microelectromechanical sensor, and electrically connected to the silicon substrate and the microelectromechanical sensor, the silicon substrate being provided with a Wheatstone bridge, and the signal processing chip being connected to an output end of the Wheatstone bridge; and
a stress diaphragm, disposed above the microelectromechanical sensor, one side of the stress diaphragm being in contact with the microelectromechanical sensor, the other side of the stress diaphragm being in contact with the electrolyte inside the cell for detecting temperature and/or pressure data inside the cell, and the stress diaphragm being made of aluminum, wherein
the microelectromechanical sensor and/or the signal processing chip is embedded in the silicon substrate by way of automated laser welding or piezoresistive submerged arc welding.

8. The lithium battery according to claim 7, wherein the Wheatstone bridge has a symmetrical resistance value of 100 Ω-1000 Q.

9. The lithium battery according to claim 7, wherein the signal processing chip is an analog-to-digital converter.

10. The lithium battery according to claim 9, wherein the analog-to-digital converter has a conversion range of 10 bits-32 bits.

11. The lithium battery according to claim 7, wherein the signal processing chip has one or more standard communication protocols, and the standard communication protocols are IIC protocols, SPI protocols or TTL protocols.

12. The lithium battery according to claim 7, wherein the microelectromechanical sensor is made of monocrystalline silicon.
